# EUROPÄISCHE PATENTSCHRIFT

(11) **EP 3 488 744 B1**
(45) Veröffentlichungstag und Bekanntmachung des Hinweises auf die Patenterteilung: **24.05.2023**
(21) Anmeldenummer: 18207604.2
(22) Anmeldetag: 21.11.2018
(51) Int. Cl.: A47J 43/07

(54) **STABMIXERELEMENT, VERGRÖSSERUNGSTEIL FÜR EIN STABMIXERELEMENT UND GRÖSSENVERÄNDERLICHER STABMIXER**
HAND-HELD BLENDER ELEMENT, EXTENSION FOR A HAND-HELD BLENDER ELEMENT AND EXTENDIBLE HAND-HELD BLENDER
ÉLÉMENT DE MIXEUR PLONGEUR, PARTIE D'AGRANDISSEMENT POUR UN ÉLÉMENT DE MIXEUR PLONGEUR ET MIXEUR PLONGEUR DE TAILLE VARIABLE

(30) Priorität: 27.11.2017 DE 102017221133
(43) Veröffentlichungstag der Anmeldung: 29.05.2019
(73) Patentinhaber: BSH Hausgeräte GmbH, 81739 München (DE)
(72) Erfinder: Koscak, Ales, 6230 Postojna (SI); Orbanic, Henri, 1000 Ljubljana (SI); Zilnik, Marko, 1218 Komenda (SI); Uplaznik, Marko, 3312 Prebold (SI)

(56) Entgegenhaltungen:
- EP-A1- 2 845 529
- DE-A1-102009 054 215
- US-A- 5 360 170

## Beschreibung

Die vorliegende Erfindung betrifft ein Stabmixerelement, ein Vergrößerungsteil für ein Stabmixerelement und einen Stabmixer.

Stabmixer (bzw. Pürierstäbe) weisen in der Regel ein rotierbares Werkzeug an einer Welle auf, die mit einem Elektromotor angetrieben werden kann. Als Spritzschutz sowie zum Verhindern, dass ein Verwender versehentlich mit der Hand in das rotierende Werkzeug fasst, ist dieses teilweise von einer Gehäuseglocke umgeben.

Je nach vorgesehener Verwendung stehen verschiedene Stabmixer, insbesondere unterschiedlicher Länge und unterschiedlicher Dimensionierung des jeweiligen Werkzeugs und des das Werkzeug umgebenden Gehäuses zur Verfügung. Die Länge des Stabmixers und die Größe seiner Gehäuseglocke bestimmen maßgeblich die Handlichkeit des Geräts sowie seine Eignung zum Eintauchen in ein jeweiliges Rührgefäß und zum Bearbeiten eines jeweiligen Lebensmittels. Gattungsgemäße Stabmixer sind beispielsweise aus der US 5 360 170 A oder der EP 2 845 529 A1 bekannt. Ein Mixerelement mit ähnlichen Merkmalen wie ein Stabmixerelement ist aus der DE 10 2009 054215 A1 bekannt.

Der vorliegenden Erfindung lag die Aufgabe zugrunde, eine Technik bereitzustellen, die einen Stabmixer mit einem flexibleren Einsatzbereich ermöglicht.

Die Aufgabe wird gelöst durch ein Stabmixerelement gemäß Anspruch 1 und einen Stabmixer umfassend ein Stabmixerelement und ein Vergrößerungsteil gemäß Anspruch 3. Vorteilhafte Ausführungsformen sind in den Unteransprüchen, der Beschreibung und den Figuren offenbart.

Ein erfindungsgemäßes Stabmixerelement hat ein Bearbeitungsende, also ein Ende, mit dem ein Lebensmittel bearbeitet werden kann. An ihm ist ein rotierbares Werkzeug innerhalb einer Gehäuseglocke (also in einem von der Gehäuseglocke begrenzten Bearbeitungsraum des Stabmixerelements) angeordnet. Das Bearbeitungsende weist dabei mindestens eine Verbindungskomponente zur lösbaren (insbesondere form- und/oder kraftschlüssigen) Verbindung mit einem Vergrößerungsteil zur Vergrößerung des Stabmixerelements auf. Das Stabmixerelement kann als ein voll funktionsfähiger, einen Elektromotor umfassender Stabmixer ausgebildet sein, der erfindungsgemäß vergrößerbar ist. Alternativ kann das Stabmixerelement lediglich einen Teil (beispielsweise einen Ansatzfuß) eines größenveränderlichen Stabmixers ausmachen, indem es mit einem anderen Element (das beispielsweise einen Elektromotor umfassen kann) kombiniert, insbesondere zusammengesetzt werden kann; ein derartiges anderes Element kann insbesondere an einem dem Bearbeitungsende entgegengesetzten Ende des Stabmixerelements zu fixieren sein.

Ein erfindungsgemäßes Vergrößerungsteil dient einer Vergrößerung eines Stabmixerelements, insbesondere eines erfindungsgemäßen Stabmixerelements gemäß einer der in dieser Schrift offenbarten Ausführungsformen. Es umfasst ein rotierbares Werkzeug, das zur Unterscheidung vom rotierbaren Werkzeug des Stabmixerelements in dieser Schrift im Weiteren als "Vergrößerungswerkzeug" bezeichnet wird, sowie ein Gehäuseteil, das das Vergrößerungswerkzeug ringartig umgibt.

An einer dem Stabmixerelement zuzuwendenden Seite kann das Gehäuseteil eine durchlässige (z.B. gitter- oder siebartige) oder abgeschlossene Abdeckung aufweisen und so - nach einer Verbindung des Vergrößerungsteils mit dem Stabmixerelement - einen gegenüber dem Raum unter dessen Gehäuseglocke abgegrenzten oder sogar abgeschlossenen Bearbeitungsraum ausbilden. Das Gehäuseteil kann (im Wesentlichen) drehsymmetrisch, insbesondere rotationssymmetrisch um eine Achse geformt sein, die mit der vorgesehenen Rotationsachse des Vergrößerungswerkzeugs übereinstimmt. Zur lösbaren (beispielsweise form- und/oder kraftschlüssigen) Verbindung mit einem Bearbeitungsende des Stabmixerelements weist das Vergrößerungsteil ein Verbindungselement auf.

An einer einem Rührgefäßboden zuzuwendenden Seite kann das Gehäuseteil Ausbuchtungen, beispielsweise in Form von Wellen und/oder Zacken aufweisen, die insbesondere eine Zirkulation des jeweils bearbeiteten Lebensmittels zwischen einem Außenbereich und dem Bearbeitungsraum des Vergrößerungsteils auch dann ermöglicht, wenn das Vergrößerungsteil auf einen Rührgefäßboden aufgesetzt ist. Alternativ oder zusätzlich kann das Gehäuseteil Öffnungen aufweisen, durch die hindurch Lebensmittel in den und/oder aus dem Bearbeitungsraum des Vergrößerungsteils wandern kann.

Ein erfindungsgemäßer Stabmixer umfasst ein erfindungsgemäßes Stabmixerelement und ein erfindungsgemäßes Vergrößerungsteil (jeweils gemäß einer der in dieser Schrift offenbarten Ausführungsformen), wobei das Stabmixerelement und das Vergrößerungsteil lösbar (vorzugsweise form- und/oder kraftschlüssig) miteinander zu verbinden sind; insbesondere passt dabei also die Verbindungskomponente am Bearbeitungsende des Stabmixerelements zum Verbindungselement des Vergrößerungsteils.

Das rotierbare Werkzeug und das rotierbare Vergrößerungswerkzeug können gleichartig (z.B. beide als rotierbare Messer) oder verschiedenartig (z.B. als ein rotierbares Messer einerseits und ein rotierbares Rührelement andererseits) ausgebildet sein.

Gemäß einer vorteilhaften Ausführungsform eines erfindungsgemäßen Stabmixers weist das Vergrößerungswerkzeug einen Rotationsradius auf, der größer ist als ein Rotationsradius des rotierbaren Werkzeugs des Stabmixerelements.

Die vorliegende Erfindung stellt somit eine Technik bereit, mit der ein Stabmixer in verschiedenen Varianten eingesetzt werden kann, nämlich einerseits mit, andererseits ohne Vergrößerungsteil. Damit kann der Stabmixer verlängert bzw. verkürzt und/oder für die Zubereitung verschiedener Speisen verwendet werden, für die jeweils unterschiedlich große Werkzeuge und/oder Rührgefäße vorteilhaft oder sogar erforderlich sind. Der Stabmixer ist somit anpassungsfähig an die jeweiligen Einsatzbedingungen, so dass ein Verwender für den jeweiligen Gebrauch nicht zwei verschiedene Stabmixer benötigt. Insbesondere wird damit Stauraum gespart.

Die mindestens eine Verbindungskomponente am Bearbeitungsende eines erfindungsgemäßen Stabmixerelements ist ein Gewinde, ein Element eines Bajonettanschlusses und/oder ein Element einer Rastverbindung das/die dazu eingerichtet ist/sind, mit einem jeweiligen (als Verbindungselement dienenden) Gegenelement am Vergrößerungsteil zusammenzuwirken. Sie ist an einem Rand der Gehäuseglocke angeordnet.

Analog ist das wenigstens eine Verbindungselement eines erfindungsgemäßen Vergrößerungsteils ein Gewinde, ein Element eines Bajonettanschlusses und/oder ein Element einer Rastverbindung das/die dazu eingerichtet ist/sind, mit einer jeweiligen (als Verbindungskomponente dienenden) Gegenkomponente am Stabmixerelement zusammenzuwirken. Es ist an einem dem Stabmixerelement (bzw. dessen Bearbeitungsende) zuzuwendenden Rand des Gehäuseteils angeordnet.

Gemäß einem speziellen Ausführungsbeispiel ist das Vergrößerungsteil dazu eingerichtet, als Zwischenteil zu fungieren und seinerseits vergrößert zu werden: Dazu kann es zusätzlich zu dem wenigstens einen Verbindungselement zur Verbindung mit einem Bearbeitungsende des Stabmixerelements mindestens ein Verbindungsteil zur lösbaren (beispielsweise form- und/oder kraftschlüssigen) Verbindung mit einem weiteren Vergrößerungsteil aufweisen. Das wenigstens eine Verbindungselement und das mindestens eine Verbindungsteil des Vergrößerungsteils sind bei einer derartigen Ausführungsform vorzugsweise an einander entgegengesetzten Rändern des Gehäuseteils angeordnet. Sie können gleichartig oder verschiedenartig (z.B. als ein Gewinde an einem der Ränder und ein Element einer Rastverbindung am anderen der Ränder) ausgebildet sein.

Alternativ kann das Vergrößerungsteil als Endstück ausgebildet sein, das lediglich an einer Seite dazu eingerichtet ist, mittels des wenigstens einen Verbindungselements mit einem Stabmixerelement (das ggf. mittels eines als Zwischenteil ausgebildeten Vergrößerungsteils vergrößert sein kann) verbunden zu werden.

Ein erfindungsgemäßer Stabmixer kann ein oder mehrere als Zwischenteil ausgebildete/s Vergrößerungsteil/e umfassen und/oder ein als Endstück ausgebildetes Vergrößerungsteil. Auf diese Weise kann ein derartiger Stabmixer sukzessive vergrößerbar sein.

Die bei einer Verbindung von Stabmixerelement und Vergrößerungsteil um dessen Gehäuseteil vergrößerte Gehäuseglocke weist vorzugsweise eine oder mehrere Durchtrittsöffnung/en für ein jeweils bearbeitetes Lebensmittel auf, so dass dieses zwischen einem Innenbereich und einem Außenbereich der vergrößerten Gehäuseglocke auch dann zirkulieren kann, wenn die vergrößerte Gehäuseglocke auf einen glatten Gefäßboden aufgesetzt ist. Insbesondere kann das Gehäuseteil eines erfindungsgemäßen Vergrößerungsteils mindestens eine derartige Durchtrittsöffnung aufweisen.

Gemäß einer vorteilhaften Ausführungsform eines erfindungsgemäßen Stabmixers ist das Gehäuseteil eines Vergrößerungsteils an seiner dem Stabmixerelement zuzuwendenden oder zugewandten Seite mindestens teilweise offen, so dass also ein bearbeitetes Lebensmittel von einem Bearbeitungsraum des Vergrößerungsteils in einen Bearbeitungsraum des Stabmixerelements wandern kann. Auf diese Weise kann ein Anteil des Lebensmittels vom Vergrößerungswerkzeug zu bearbeiten sein, während gleichzeitig ein anderer Anteil des Lebensmittels vom Werkzeug des Stabmixerelement bearbeite wird. Das Gehäuseteil kann beispielsweise Abdeckung aufweisen, in der ein Durchlass für das Lebensmittel ausgebildet ist. Insbesondere kann eine derartige Abdeckung gitter- bzw. siebartig ausgebildet sein, so dass sichergestellt werden kann, dass nur ein hinreichend feiner (z.B. zerkleinerter) Anteil des Lebensmittels in den Bearbeitungsraum des Stabmixerelements vordringt. Dessen Werkzeug kann somit einer Verfeinerung und/oder Vervollkommnung einer durch das Vergrößerungswerkzeug vorgenommenen Bearbeitung dienen.

Bei derartigen Ausführungsvarianten kann die eine bzw. mindestens eine der oben genannten Durchtrittsöffnungen der vergrößerten Gehäuseglocke vorteilhaft im Gehäuseteil des Vergrößerungsteils, in der Gehäuseglocke des Stabmixerelements und/oder in einem Verbindungsbereich zwischen der Gehäuseglocke des Stabmixerelements und dem Gehäuseteil des Vergrößerungsteils ausgebildet sein.

Insbesondere kann die Gehäuseglocke am Bearbeitungsende eines erfindungsgemäßen Stabmixerelements Ausbuchtungen, beispielsweise in Form von Wellen und/oder Zacken aufweisen. Diese können zum einen dazu dienen, bei alleiniger Verwendung des (unvergrößerten) Stabmixerelements eine Zirkulation des jeweils bearbeiteten Lebensmittels (zwischen einem Außenbereich der Gehäuseglocke und dem Bearbeitungsraum des Stabmixerelements) unter der Gehäuseglocke hindurch auch dann zu ermöglichen, wenn diese auf einen glatten Gefäßboden aufgesetzt ist. Zum anderen kann die Gehäuseglocke in Zwischenbereichen jeweils zwischen benachbarten Ausbuchtungen zusammen mit einem verbundenen Gehäuseteil eines Vergrößerungsteils Durchtrittsöffnungen wie oben erwähnt ausbilden, die dann also zwischen der Gehäuseglocke des Stabmixerelements und dem Gehäuseteil des Vergrößerungsteils angeordnet sind.

Insbesondere kann die mindestens eine Verbindungskomponente des Stabmixerelements lediglich in derartigen Ausbuchtungen angeordnet sein, und/oder das mindestens eine Verbindungselement des Vergrößerungsteils kann (beispielsweise durch seine Position und/oder durch sein Zusammenwirken mit einer entsprechenden Gegenkomponente) dazu eingerichtet sein, lediglich eine Verbindung mit einer Ausbuchtung der Gehäuseglocke des Stabmixerelements einzugehen.

Das Vergrößerungswerkzeug des Vergrößerungsteils ist vorzugsweise an das rotierbare Werkzeug des Stabmixerelements und/oder an eine Welle des rotierbaren Werkzeugs des Stabmixerelements koppelbar, so dass also eine Rotation des Werkzeugs bzw. der Welle des Stabmixerelements auf das Vergrößerungswerkzeug übertragen werden kann. Das rotierbare Werkzeug und/oder dessen Welle können/kann dazu mindestens ein Kupplungselement aufweisen, das dazu eingerichtet ist, nach einer Verbindung des Stabmixerelements mit einem Vergrößerungsteil in ein Kupplungsgegenelement am Vergrößerungsteil einzugreifen; ein solches Kupplungsgegenelement wird in dieser Schrift auch als "Kupplungsteil" bezeichnet.

Das Kupplungselement kann insbesondere ein Profil im rotierbaren Werkzeug und/oder in einer (dem Vergrößerungsteil zugewandten bzw. zuzuwendenden) Stirnseite der Welle umfassen.

Das Vergrößerungswerkzeug eines erfindungsgemäßen Vergrößerungsteils ist vorzugsweise mittels einer Verlängerungswelle rotierbar, die dazu eingerichtet sein kann, nach der Verbindung des Vergrößerungsteils mit dem Stabmixerelement eine Welle des rotierbaren Werkzeugs zu verlängern. Die Verlängerungswelle weist vorzugsweise ein Kupplungsteil auf, das dazu eingerichtet ist, (nach einer Verbindung des Vergrößerungsteils mit dem Stabmixerelement) zur Übernahme einer Rotation in das rotierbare Werkzeug, in ein Kupplungselement am rotierbaren Werkzeug und/oder in ein Kupplungselement an der Welle des Stabmixerelements einzugreifen. Kupplungsteil und Vergrößerungswerkzeug sind vorzugsweise an entgegengesetzten Enden der Verlängerungswelle angeordnet.

Das Kupplungsteil, das insbesondere als ein Profil ausgebildet sein kann, kann an einer Stirnseite der Verlängerungswelle ausgebildet und/oder an ein sich radial zur Verlängerungswelle erstreckendes Element umfassen, beispielsweise eine Scheibe oder einen Steg, die jeweils ein Mittel zum Eingriff in das rotierbare Werkzeug aufweisen können.

Bei Ausführungsformen, bei denen wie erwähnt das Vergrößerungsteil dazu geeignet ist, als Zwischenteil verwendet und seinerseits vergrößert zu werden, kann das Vergrößerungswerkzeug und/oder eine ggf. zugehörige Verlängerungswelle wiederum ein Kupplungselement aufweisen, das dazu eingerichtet ist, nach einer entsprechenden Verbindung des Zwischenteils mit einem weiteren Vergrößerungsteil zur Übertragung einer Rotation in ein entsprechendes Kupplungsteil des weiteren Vergrößerungsteils einzugreifen.

Gemäß einer bevorzugten Ausführungsvariante eines erfindungsgemäßen Vergrößerungsteils weist dessen Gehäuseteil einen mit dem Stabmixerelement zu verbindenden Rand auf, dessen Innendurchmesser kleiner ist als ein Innendurchmesser eines entgegengesetzten Randes des Gehäuseteils. Nach einer Verbindung des Vergrößerungsteils mit dem Stabmixerelement wird also eine im Vergleich zu dessen Gehäuseglocke geweitete Glocke ausgebildet. Ein derartiges Vergrößerungsteil ermöglicht somit eine besonders große Variabilität eines zugehörigen Stabmixers und damit eine besonders flexible Verwendbarkeit desselben.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch und jeweils in einer Schnittdarstellung
- Figur 1:: ein erfindungsgemäßes Stabmixerelement gemäß einer exemplarischen Ausführungsform;
- Figur 2:: ein exemplarisches erfindungsgemäßes Vergrößerungsteil für ein Stabmixerelement; und
- Figur 3:: ein Ausführungsbeispiel für ein erfindungsgemäß verlängertes Stabmixerelement.

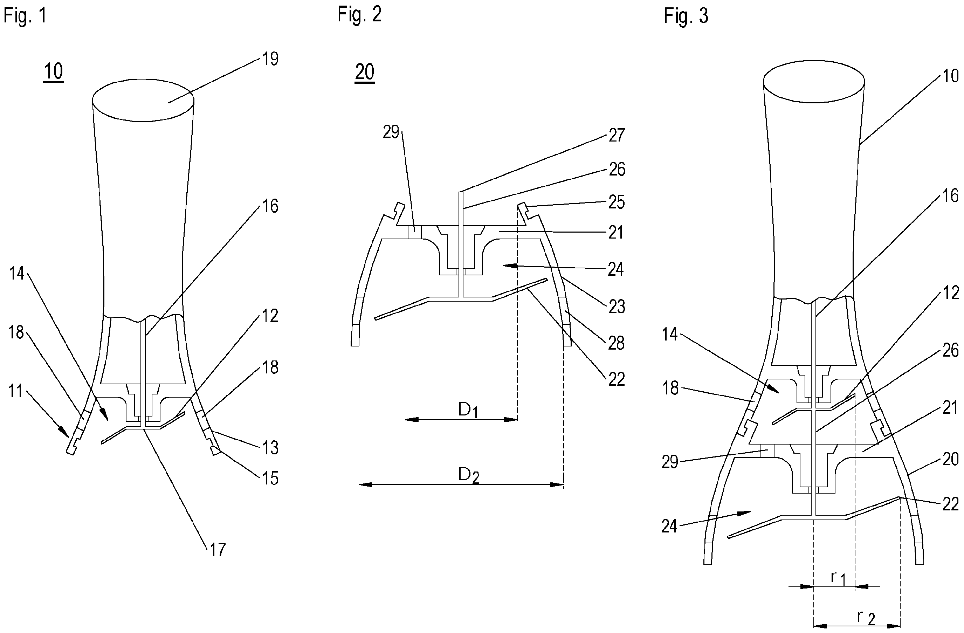

In Figur 1 ist ein Ausführungsbeispiel eines erfindungsgemäßen Stabmixerelements 10 dargestellt. Es umfasst ein Bearbeitungsende 11, an dem ein rotierbares Werkzeug 12 innerhalb einer Gehäuseglocke 13 angeordnet ist. Die Gehäuseglocke 13 bildet somit einen Bearbeitungsraum 14 aus, in dem ein Lebensmittel mit dem rotierbaren Werkzeug 12 bearbeitet werden kann. Zur Verbesserung einer Zirkulation des Lebensmittels in den bzw. aus dem Bearbeitungsraum 14 sind im gezeigten Ausführungsbeispiel Öffnungen 18 als Durchtrittsöffnungen vorgesehen.

Das Stabmixerelement 10 ist vorliegend als ein Ansatzfuß eines Stabmixers ausgebildet: An seinem dem Bearbeitungsende entgegengesetzten Ansatzende 19 kann das Stabmixerelement 10 mit einem (nicht gezeigten) Griff- und Motorelement eines Stabmixers so verbunden werden, dass eine von einem im Griff- und Motorelement enthaltenen Elektromotor erzeugte Drehbewegung mittels einer Welle 16 auf das rotierbare Werkzeug 12 übertragen werden kann.

Das Stabmixerelement 10 ist dazu eingerichtet, mit einem Vergrößerungsteil lösbar formschlüssig verbunden und auf diese Weise vergrößert zu werden. Dazu weist das Bearbeitungsende 11 eine Verbindungskomponente 15 auf, die vorliegend als ein Element einer Rastverbindung in Form einer Rille am Rand der Gehäuseglocke 13 ausgebildet ist:

Die Rille ist dazu eingerichtet, geeignet geformte Rastzungen an einem Vergrößerungsteil aufzunehmen.

An seiner Stirnseite weist die Welle ein Kupplungselement 17 auf, das beispielsweise ein Profil umfassen kann (in der Figur nicht erkennbar) und das dazu eingerichtet ist, in ein entsprechendes Kupplungsteil (z.B. mit einem entsprechenden Gegenprofil) einer Verlängerungswelle des Vergrößerungsteils einzugreifen. Die Verlängerungswelle kann damit eine Rotation der Welle 16 übernehmen und so eine Rotation eines Vergrößerungswerkzeugs des Vergrößerungsteils bewirken.

In Figur 2 ist ein erfindungsgemäßes Vergrößerungsteil 20 für ein Stabmixerelement dargestellt. Das Vergrößerungsteil 20 umfasst ein rotierbares Vergrößerungswerkzeug 22 und ein Gehäuseteil 23, das das Vergrößerungswerkzeug 22 ringartig umgibt. Das Gehäuseteil 23 weist im dargestellten Beispiel an der dem Stabmixerelement zuzuwendenden Seite eine Abdeckung 21 auf, so dass das Gehäuseteil 23 insgesamt glockenartig geformt ist und einen Bearbeitungsraum 24 ausbildet, in dem das Vergrößerungswerkzeug 22 rotierbar ist. In der Abdeckung 21 ist im gezeigten Beispiel ein Durchlass 29 für Lebensmittel vorgesehen, durch den hindurch bearbeitetes Lebensmittel zwischen dem Bearbeitungsraum 24 und in einem Bearbeitungsraum 14 (siehe Figur 1) eines zu verbindenden Stabmixerelements wandern kann.

Ein mit dem Stabmixerelement zu verbindender Rand des Gehäuseteils 23 hat einen Innendurchmesser D₁, der kleiner ist als ein Innendurchmesser D₂ eines entgegengesetzten Randes des Gehäuseteils 23. Nach einer Verbindung des Vergrößerungsteils 20 mit einem Stabmixerelement wird also eine im Vergleich dazu geweitete Gehäuseglocke ausgebildet.

Zur Verbesserung einer Zirkulation des jeweils bearbeiteten Lebensmittels weist das Gehäuseteil 23 Öffnungen 28 auf, durch die hindurch das Lebensmittel auch dann in den Bearbeitungsraum hinein- und/oder aus diesem heraustreten kann, wenn der vergrößerte Stabmixer auf einen Boden (z.B. eines Rührgefäßes) aufgesetzt ist.

An einem Rand des Gehäuseteils 23 sind Verbindungselemente 25 angeformt, die im vorliegenden Fall als elastisch nachgiebige Rastzungen ausgebildet sind. Die Rastzungen sind dabei dazu vorgesehen, in eine geeignete Komponente am Bearbeitungsende des Stabmixerelements einzugreifen, insbesondere in eine als Rille ausgebildete Verbindungskomponente 15 des in Figur 1 gezeigten Stabmixerelements. So kann das Vergrößerungsteil lösbar formschlüssig mit einem (passenden) Stabmixerelement verbunden werden.

Das Vergrößerungswerkzeug 22 ist mittels einer Verlängerungswelle 26 rotierbar, die dazu eingerichtet ist, an eine Welle des zu verbindenden Stabmixerelements angesetzt zu werden und diese dadurch zu verlängern. Dabei weist die Verlängerungswelle 26 an ihrer Stirnseite ein Kupplungsteil 27 auf (in der Figur nicht erkennbar), das dazu eingerichtet ist, in ein Kupplungselement (wie insbesondere das in der Figur 1 bezeichnete Kupplungselement 17) an einer Welle des zu verbindenden Stabmixerelements einzugreifen und so dessen Rotation auf- bzw. übernehmen zu können. Auf diese Weise kann das Vergrößerungswerkzeug mittels desselben Elektromotors und derselben Welle wie das rotierbare Werkzeug des Stabmixerelements zur Rotation gebracht werden.

Gemäß einer alternativen (nicht gezeigten) Ausführungsvariante kann das Kupplungsteil sich (bezogen auf die Verlängerungswelle) radial erstrecken und dazu eingerichtet sein, in das rotierbare Werkzeug 12 des Stabmixerelements einzugreifen und so dessen Rotation zu übernehmen.

Figur 3 zeigt das erfindungsgemäß um ein Vergrößerungsteil 20 vergrößerte Stabmixerelement 10, bei dem die Verbindungskomponente 15 des Stabmixerelements 10 und die Verbindungselemente 25 des Vergrößerungsteils lösbar formschlüssig miteinander verbunden sind und bei dem die Verlängerungswelle 26 an die Welle 16 angekuppelt ist.

Wie in der Figur 3 ersichtlich, ist das (rotierbare) Vergrößerungswerkzeug 22 größer als das rotierbare Werkzeug 12, insbesondere ist der Rotationsradius r₂ des Vergrößerungswerkzeugs 22 größer als der Rotationsradius r₁ des rotierbaren Werkzeugs 12.

Die Gehäuseglocke 13 am Bearbeitungsende 11 des in den Figuren 1 und 3 dargestellten Stabmixerelements und/oder das Gehäuseteil 23 des in den Figuren 2 und 3 gezeigten Vergrößerungsteils können jeweils an ihrer einem Rührgefäßboden zuzuwendenden Seite Ausbuchtungen, beispielsweise in Form von Wellen und/oder Zacken aufweisen (in der Schnittdarstellung der Figuren nicht erkennbar), die insbesondere eine Zirkulation des jeweils bearbeiteten Lebensmittels zwischen einem Außenbereich und dem jeweiligen Bearbeitungsraum 14 bzw. 24 ermöglichen.

Im gezeigten Fall, dass die Abdeckung 21 des Gehäuseteils 23 mindestens einen Durchlass 29 aufweist, weist die um das Gehäuseteil 23 vergrößerte Gehäuseglocke (alternativ oder zusätzlich zu den Öffnungen 28 im Gehäuseteil) vorzugsweise mindestens eine (weitere) Durchtrittsöffnung für bearbeitetes Lebensmittel auf. Im dargestellten Ausführungsbeispiel sind Öffnungen 18 als derartige Durchtrittsöffnungen in der Gehäuseglocke 13 des Stabmixerelements 10 ausgebildet; alternativ oder zusätzlich kann mindestens eine Durchtrittsöffnung zwischen der Gehäuseglocke 13 und dem mit ihr verbundenen Gehäuseteil 23 ausgebildet sein (in den Figuren nicht dargestellt bzw. erkennbar). Insbesondere kann dann ein vom Vergrößerungswerkzeug 22 bearbeitetes Lebensmittel vom Bearbeitungsraum 24 des Vergrößerungsteils 20 durch mindestens einen Durchlass 29 in der Abdeckung 21 hindurch in den Bearbeitungsraum 14 des Stabmixerelements 10 und von diesem durch die mindestens eine Durchtrittsöffnung (beispielsweise die Öffnungen 18) in einen Außenbereich wandern.

Aufgrund der Lösbarkeit der Verbindung kann ein Anwender je nach zu bearbeitendem Lebensmittel und/oder verwendetem Rührgefäß einen Stabmixer mit allein dem Stabmixerelement 10 verwenden oder einen Stabmixer mit einem Stabmixerelement, das um das Vergrößerungsteil 20 vergrößert ist. Ein zugehöriger Stabmixer ist somit besonders flexibel einsetzbar.

Offenbart ist ein Stabmixerelement 10 mit einem Bearbeitungsende 11, an dem ein rotierbares Werkzeug 12 innerhalb einer Gehäuseglocke 13 angeordnet ist. Das Bearbeitungsende 11 weist dabei mindestens eine Verbindungskomponente 15 zur lösbaren Verbindung mit einem Vergrößerungsteil 20 auf, mit dem das Stabmixerelement vergrößert werden kann.

Offenbart ist ferner ein Vergrößerungsteil 20 für ein Stabmixerelement 10. Das Vergrößerungsteil umfasst ein rotierbares Vergrößerungswerkzeug 22, ein Gehäuseteil 23, das das Vergrößerungswerkzeug ringartig umgibt, und wenigstens ein Verbindungselement 25 zur lösbaren Verbindung mit einem Bearbeitungsende 11 des Stabmixerelements.

Offenbart ist zudem ein größenveränderlicher Stabmixer mit einem Stabmixerelement 10 und einem lösbar mit diesem verbundenen bzw. zu verbindenden Vergrößerungsteil 20.

### Bezugszeichen

- 10: Stabmixerelement
- 11: Bearbeitungsende des Stabmixerelements 10
- 12: rotierbares Werkzeug
- 13: Gehäuseglocke
- 14: Bearbeitungsraum des Stabmixerelements
- 15: Verbindungskomponente
- 16: Welle
- 17: Kupplungselement
- 18: Öffnung in der Gehäuseglocke 13
- 19: Ansatzende

- 20: Vergrößerungsteil
- 21: Abdeckung des Gehäuseteils 23
- 22: rotierbares Vergrößerungswerkzeug
- 23: Gehäuseteil
- 24: Bearbeitungsraum des Vergrößerungsteils
- 25: Verbindungselement
- 26: Verlängerungswelle
- 27: Kupplungsteil
- 28: Öffnung im Gehäuseteil 23
- 29: Durchlass in der Abdeckung 21

- D₁: Innendurchmesser des mit dem Stabmixerelement zu verbindenden Randes des Gehäuseteils 23
- D₂: Innendurchmesser des entgegengesetzten Randes des Gehäuseteils 23

- r₁: Rotationsradius des rotierbaren Werkzeugs 12
- r₂: Rotationsradius des rotierbaren Vergrößerungswerkzeugs 22

## Patentansprüche

1. Stabmixerelement (10) mit einem Bearbeitungsende (11), an dem ein rotierbares Werkzeug (12) innerhalb einer Gehäuseglocke (13) angeordnet ist, wobei das Bearbeitungsende (11) mindestens eine Verbindungskomponente (15) zur lösbaren Verbindung mit einem Vergrößerungsteil (20) zur Vergrößerung des Stabmixerelements aufweist, **dadurch gekennzeichnet, dass** die mindestens eine Verbindungskomponente (15) ein Gewinde, ein Element eines Bajonettanschlusses und/oder ein Element einer Rastverbindung umfasst, das/die dazu eingerichtet ist/sind, mit einem jeweiligen Gegenelement am Vergrößerungsteil zusammenzuwirken und an einem Rand der Gehäuseglocke angeordnet ist.

2. Stabmixerelement nach Anspruch 1, wobei eine Welle (16) des rotierbaren Werkzeugs und/oder das rotierbare Werkzeug (12) mindestens ein Kupplungselement (17) aufweist, das dazu eingerichtet ist, zur Übertragung einer Rotation auf eine Verlängerungswelle (26) des Vergrößerungsteils in ein Kupplungsgegenelement (27) einzugreifen.

3. Stabmixer umfassend ein Stabmixerelement (10) nach einem der Ansprüche 1 oder 2 und ein Vergrößerungsteil (20) für das Stabmixerelement (10), wobei das Vergrößerungsteil ein rotierbares Vergrößerungswerkzeug (22) sowie ein Gehäuseteil (23) umfasst, das das Vergrößerungswerkzeug ringartig umgibt, und wobei das Vergrößerungsteil wenigstens ein Verbindungselement (25) zur lösbaren Verbindung mit einem Bearbeitungsende (11) des Stabmixerelements aufweist, **dadurch gekennzeichnet, dass** das wenigstens eine Verbindungselement (25) ein Gewinde, ein Element eines Bajonettanschlusses und/oder ein Element einer Rastverbindung umfasst, das/die am Gehäuseteils (23) angeordnet und dazu eingerichtet ist/sind, mit einer jeweiligen Gegenkomponente am Stabmixerelement zusammenzuwirken und an einem dem Stabmixerelement zuzuwendenden Rand des Gehäuseteils angeordnet ist.

4. Stabmixer mit einem Vergrößerungsteil nach Anspruch 3, wobei das Vergrößerungswerkzeug (22) eine Verlängerungswelle (26) mit einem Kupplungsteil (27) aufweist, das dazu eingerichtet ist, zur Übernahme einer Rotation in ein rotierbares Werkzeug (12) des Stabmixerelements, in ein Kupplungselement (17) am rotierbaren Werkzeug (12) des Stabmixerelementsund/oder in ein Kupplungselement an einer Welle (16) des Stabmixerelements einzugreifen.

5. Stabmixer mit einem Vergrößerungsteil gemäß einem der Ansprüche 3 bis 4, wobei das Gehäuseteil (23) einen mit dem Stabmixerelement zu verbindenden Rand aufweist, dessen Innendurchmesser (D 1) kleiner ist als ein Innendurchmesser (D 2) eines entgegengesetzten Randes des Gehäuseteils.

6. Stabmixer mit einem Vergrößerungsteil nach einem der Ansprüche 3 bis 5, wobei das Stabmixerelement und das Vergrößerungsteil lösbar miteinander verbunden bzw. zu verbinden sind.

7. Stabmixer mit einem Vergrößerungsteilnach Anspruch 6, wobei das Vergrößerungswerkzeug (22) des Vergrößerungsteils (20) größer ist als das rotierbare Werkzeug (12) des Stabmixerelements (10).

## Claims

1. Hand-held blender element (10) with a processing end (11), on which a rotatable tool (12) is arranged within a housing bell (13), wherein the processing end (11) has at least one connecting component (15) for detachable connection to an extension piece (20) for extending the hand-held blender element, **characterised in that** the at least one connecting component (15) comprises a thread, an element of a bayonet connection and/or an element of a latching connection, which is/are designed to interact with a respective counter element on the extension piece and is/are arranged on an edge of the housing bell.

2. Hand-held blender element according to claim 1, wherein a shaft (16) of the rotatable tool and/or the rotatable tool (12) has at least one coupling element (17) which is designed to engage into a counter-coupling element (27) in order to transfer a rotation to an extension shaft (26) of the extension piece.

3. Hand-held blender comprising a hand-held blender element (10) according to one of claims 1 or 2 and an extension piece (20) for the hand-held blender element (10), wherein the extension piece comprises a rotatable extension tool (22) and a housing part (23) which surrounds the extension tool in the manner of a ring, and wherein the extension piece has at least one connecting element (25) for detachable connection to a processing end (11) of the hand-held blender element, **characterised in that** the at least one connecting element (25) comprises a thread, an element of a bayonet connection and/or an element of a latching connection, which is/are arranged on the housing part (23) and which is/are designed to interact with a respective counter component on the hand-held blender element and which is/are arranged on an edge of the housing bell which is to face the hand-held blender element.

4. Hand-held blender with an extension piece according to claim 3, wherein the extension tool (22) has an extension shaft (26) with a coupling piece (27), which is designed to engage into a coupling element (17) on the rotatable tool (12) of the hand-held blender element and/or to engage into a coupling element on a shaft (16) of the hand-held blender element in order to receive a rotation in a rotatable tool (12) of the hand-held blender element.

5. Hand-held blender with an extension piece according to one of claims 3 to 4, wherein the housing piece (23) has an edge to be connected to the hand-held blender element, the inner diameter (D 1) of which is smaller than an inner diameter (D 2) of an opposite edge of the housing piece.

6. Hand-held blender with an extension piece according to one of claims 3 to 5, wherein the hand-held blender element and the extension piece are or are to be detachably connected to one another.

7. Hand-held blender with an extension piece according to claim 6, wherein the extension tool (22) of the extension piece (20) is bigger than the rotatable tool (12) of the hand-held blender element (10).

## Revendications

1. Élément de mixeur plongeant (10) comprenant une extrémité de traitement (11), au niveau de laquelle un outil rotatif (12) est disposé à l'intérieur d'une cloche de boîtier (13), dans lequel l'extrémité de traitement (11) comprend au moins un composant de connexion (15) pour une liaison amovible avec une partie d'agrandissement (20) pour agrandir l'élément de mixeur plongeant,
**caractérisé en ce que** l'au moins un composant de connexion (15) comprend un filetage, un élément d'un raccord à baïonnette et/ou un élément d'une liaison par encliquetage, qui est(sont) configuré(s) pour coopérer avec un contre-élément respectif sur la partie d'agrandissement et est disposé sur un bord de la cloche de boîtier.

2. Élément de mixeur plongeant (10) selon la revendication 1, dans lequel un arbre (16) de l'outil rotatif et/ou l'outil rotatif (12) comprend au moins un élément d'accouplement (17), qui est configuré pour engrener dans un contre-élément d'accouplement (27) afin de transmettre une rotation sur un arbre de rallonge (26) de la partie d'agrandissement.

3. Mixeur plongeant comprenant un élément de mixeur plongeant (10) selon l'une des revendications 1 ou 2, et une partie d'agrandissement (20) pour l'élément de mixeur plongeant (10),
dans lequel la partie d'agrandissement comprend un outil d'agrandissement rotatif (22) ainsi qu'une partie de boîtier (23), qui entoure à la manière d'un anneau l'outil d'agrandissement, et dans lequel la partie d'agrandissement comprend au moins un élément de connexion (25) pour une liaison amovible avec une extrémité de traitement (11) de l'élément de mixeur plongeant,
**caractérisé en ce que** l'au moins un élément de connexion (25) comprend un filetage, un élément d'un raccord à baïonnette et/ou un élément d'une liaison par encliquetage, qui est(sont) disposé(s) sur la partie de boîtier (23) et est(sont) configuré(s) pour coopérer avec un contre-composant respectif sur l'élément de mixeur plongeant et est disposé sur un bord de la partie de boîtier à orienter vers l'élément de mixeur plongeant.

4. Mixeur plongeant comprenant une partie d'agrandissement selon la revendication 3, dans lequel l'outil d'agrandissement (22) comprend un arbre de rallonge (26) comprenant une partie d'accouplement (27), qui est configurée pour engrener dans un élément d'accouplement (17) sur l'outil rotatif (12) de l'élément de mixeur plongeant et/ou dans un élément d'accouplement sur un arbre (16) de l'élément de mixeur plongeant, afin d'appliquer une rotation dans un outil rotatif (12).

5. Mixeur plongeant comprenant une partie d'agrandissement selon l'une des revendications 3 à 4, dans lequel la partie de boîtier (23) comprend un bord à relier à l'élément de mixeur plongeant, dont le diamètre intérieur (D1) est inférieur à un diamètre intérieur (D2) d'un bord opposé de la partie de boîtier.

6. Mixeur plongeant comprenant une partie d'agrandissement selon l'une des revendications 3 à 5, dans lequel l'élément de mixeur plongeant et la partie d'agrandissement sont connectés ou sont à connecter l'un à l'autre de façon amovible.

7. Mixeur plongeant comprenant une partie d'agrandissement selon la revendication 6, dans lequel l'outil d'agrandissement (22) de la partie d'agrandissement (20) est plus grand que l'outil rotatif (12) de l'élément de mixeur plongeant (10).
